# EUROPEAN PATENT APPLICATION

(11) **EP 4 531 381 A1**
(43) Date of publication of application: **02.04.2025**
(21) Application number: 24203374.4
(22) Date of filing: 27.09.2024
(51) Int. Cl.: H04L 67/12, H04W 4/38, H04W 4/70

(54) **MULTI-ALERT-LEVEL MONITORING AND ALERTING FOR PREMISES USING INTERNET OF THINGS DEVICES**

(30) Priority: 28.09.2023 US 202318374463
(71) Applicant: Roku, Inc., San Jose, CA 95110 (US)
(72) Inventor: RAMESH, Sunil, San Jose, 95110 (US); CUTTER, Michael, San Jose, 95110 (US); CURTIS, Robert C., San Jose, 95110 (US); GARNER, Gregory M., San Jose, 95110 (US); BROUILLETTE, Patrick A., San Jose, 95110 (US)
(74) Representative: Mewburn Ellis LLP

(57) **Abstract**

Disclosed herein are system, method and/or computer program product embodiments, and/or combinations and sub-combinations thereof for providing a multi-alert-level monitoring and alerting service for a premises comprising a set of Internet of Things (IoT) devices. An example embodiment operates by detecting that a first event has occurred based at least on first sensor data collected from a first subset of the set of IoT devices, modifying an alert level associated with the premises from a first level to a second level in response to at least the detecting, and, in response to the modification of the alert level, modifying a set of conditions used to detect whether a second event has occurred based at least on second sensor data collected from a second subset of the set of IoT devices and/or modifying a manner in which the second sensor data is generated by or collected from the second subset.

## Description

### BACKGROUND

### FIELD

This disclosure is generally directed to a monitoring and alerting service for a premises and, in particular, to a multi-alert-level monitoring and alerting service for a premises that is implemented utilizing one or more Internet of Things (IoT) devices installed therein.

### SUMMARY

Provided herein are system, apparatus, article of manufacture, method and/or computer program product embodiments, and/or combinations and sub-combinations thereof, for providing a multi-alert-level monitoring and alerting service for a premises comprising a set of IoT devices. An example embodiment performs operations including detecting that a first event has occurred based at least on first sensor data collected from a first subset of the set of IoT devices, modifying an alert level associated with the premises from a first alert level to a second alert level in response to at least the detecting that the first event has occurred, and, in response to the modification of the alert level associated with the premises from the first alert level to the second alert level, performing one or more of: modifying a set of conditions used to detect whether a second event has occurred based at least on second sensor data collected from a second subset of the set of IoT devices; or modifying a manner in which the second sensor data is generated by or collected from the second subset of the set of IoT devices.

In some aspects, modifying the set of conditions used to detect whether the second event has occurred comprises one or more of adding or removing a condition from the set of conditions, or modifying a threshold associated with a condition in the set of conditions.

In some aspects, modifying the manner in which the second sensor data is generated by the second subset of the set of IoT devices comprises one or more of modifying a manner of operation of at least one sensor that is used to generate the second sensor data, modifying a physical environment in which at least one sensor that is used to generate the second sensor data operates, or modifying a set of sensors that are used to generate the second sensor data.

In some aspects, modifying the manner in which the second sensor data is collected from the second subset of the set of IoT devices comprises adding or modifying a communication channel over which the second sensor data is collected.

In some aspects, modifying the manner in which the second sensor data is collected from the second subset of the set of IoT devices comprises at least one of recording the second sensor data to a new storage location, or changing a duration for which the second sensor data is stored.

In some aspects, in further response to the modification of the alert level associated with the premises from the first alert level to the second alert level, the following is also performed: monitoring for a third event based at least on third sensor data collected from a third subset of the set of IoT devices.

In some aspects, in further response to the modification of the alert level associated with the premises from the first alert level to the second alert level, the following is also performed: modifying a manner in which an alert will be generated when a third event is detected based at least on third sensor data collected from a third subset of the set of IoT devices.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 illustrates a block diagram of a system for providing a multi-alert-level monitoring and alerting service for a premises comprising a set of IoT devices.
FIG. 4 illustrates a block diagram of an event definition that defines an event that may be monitored for by a multi-alert-level monitoring and alerting service, according to some embodiments.
FIG. 5A illustrates a first set of events for which monitoring is performed by a multi-alert-level monitoring and alerting service in accordance with a first alert level, according to some embodiments.
FIG. 5B illustrates a second set of events for which monitoring is performed by a multi-alert-level monitoring and alerting service in accordance with a second alert level, according to some embodiments.
FIG. 6A illustrates a first set of alerting methods utilized by a multi-alert-level monitoring and alerting service in accordance with a first alert level, according to some embodiments.
FIG. 6B illustrates a second set of alerting methods utilized by a multi-alert-level monitoring and alerting service in accordance with a second alert level, according to some embodiments.
FIG. 7 illustrates a flow diagram of a method for providing a multi-alert-level monitoring and alerting service for a premises comprising a set of IoT devices, according to some embodiments.
FIG. 8 illustrates a flow diagram of a method for providing a multi-alert-level monitoring and alerting service for a premises comprising a set of IoT devices, according to some embodiments.
FIG. 9 illustrates a flow diagram of a method for providing a multi-alert-level monitoring and alerting service for a premises comprising a set of IoT devices, according to some embodiments.
FIG. 10 illustrates a flow diagram of a method for providing a multi-alert-level monitoring and alerting service for a premises comprising a set of IoT devices, according to some embodiments.
FIG. 11 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Modern living and working spaces, such as homes, hotels, or offices, are increasingly equipped with many devices that are configured to engage in digital communications. These devices may range from traditional internet-connected devices such as personal computers, telephone systems, security systems, gaming systems, and over-the-top (OTT) streaming media players, to newer devices including "smart home" devices such as connected appliances, utilities, lights, switches, power outlets, and speakers, as well as wearable devices such as watches and/or health monitors, among countless other examples. These devices may generally be referred to as "Internet of Things" (IoT) devices.

Some IoT devices are configured to monitor for a particular event and to alert a user when the event is detected. For example, some smart doorbells utilize an integrated camera to monitor for motion on a doorstep and to alert a user when such motion is detected. Such IoT devices are typically designed to always utilize the same sensor(s), the same sensor operating parameters, and the same set of detection criteria to determine whether an event has occurred. The fixed manner of operation often represents a fine-tuned balance between achieving an acceptable detection rate and minimizing resource (e.g., power) utilization and manufacturing cost. There may be certain situations in which it would be desirable to to temporarily modify the manner in which an IoT device performs event detection (e.g., temporarily increase resource utilization to enhance detection capability). However, modifying the manner of operation of an IoT device typically requires the manufacturer thereof to redesign or reprogram the IoT device.

Provided herein are system, apparatus, device, method and/or computer program product embodiments, and/or combinations and sub-combinations thereof, for providing a multi-alert-level monitoring and alerting service for a premises comprising a set of IoT devices that addresses one or more of the foregoing issues associated with conventional IoT devices. Providing the multi-alert-level monitoring and alerting service may include (a) detecting that a first event has occurred based at least on first sensor data collected from a first subset of the set of IoT devices, (b) in response to at least the detecting that the first event has occurred, modifying an alert level associated with the premises from a first alert level to a second alert level, and (c) in response to the modification of the alert level associated with the premises from the first alert level to the second alert level, performing one or more of modifying a set of conditions used to detect whether a second event has occurred based at least on second sensor data collected from a second subset of the set of IoT devices, or modifying a manner in which the second sensor data is generated by or collected from the second subset of the set of IoT devices.

Providing the multi-alert-level monitoring and alerting service may further include, in further response to the modification of the alert level associated with the premises from the first alert level to the second alert level: activating monitoring for a third event based at least on third sensor data collected from a third subset of the set of IoT devices, or modifying a manner in which an alert will be generated when a third event is detected based at least on third sensor data collected from a third subset of the set of IoT devices.

A multi-alert-level monitoring and alerting service in accordance with embodiments described herein may advantageously utilize sensor data collected from one or more IoT devices in a premises, as well as data from other sources, to determine that an alert level associated with a premises should be elevated and elevate the alert level accordingly. Based on the elevation of the alert level, the service may dynamically modify a manner in which the IoT devices in the premises as well as the service itself are used to perform monitoring and alerting, even though such changes may increase resource utilization and/or incur a higher false positive rate. For example and without limitation, in response to the elevation of the alert level, the monitoring and alerting service may dynamically modify the operation of the IoT devices in the premises to become more sensitive to detecting certain types of events. As another non-limiting example, in response to the elevation of the alert level, the monitoring and alerting service may dynamically modify the manner in which the service generates alerts so that alerts are generated more aggressively.

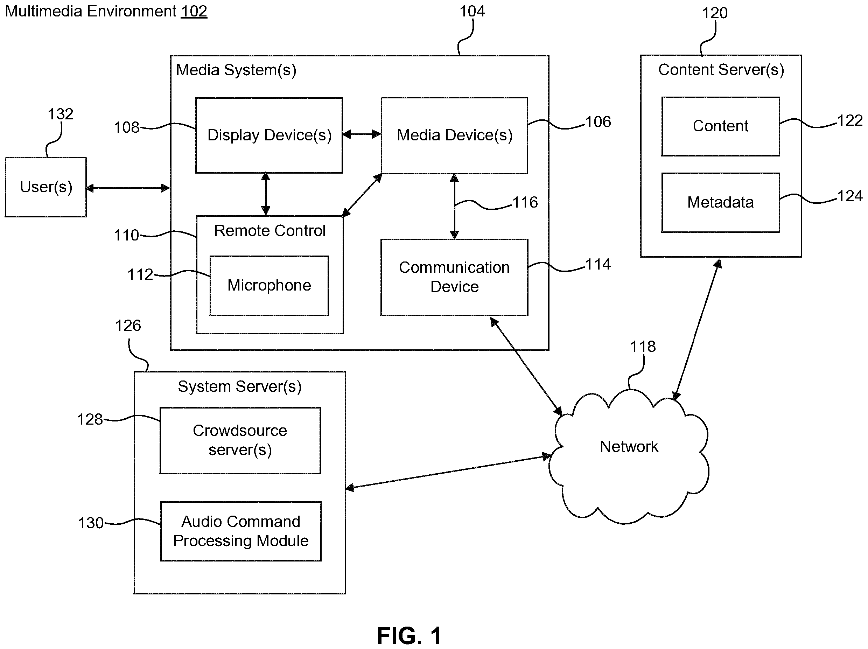

These and various other features and advantages of a multi-alert-level monitoring and alerting service in accordance with various embodiments will be described in detail herein. Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

Multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. Communication device 114 may include, for example, a cable modem or satellite TV transceiver. Media device 106 may communicate with communication device 114 over a link 116, wherein link 116 may include wireless (such as Wi-Fi) and/or wired connections.

In various embodiments, network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. Remote control 110 can be any component, part, apparatus and/or method for controlling media device 106 and/or display device 108, such as a remote control, a tablet, laptop computer, smartphone, wearable, on-screen controls, integrated control buttons, audio controls, or any combination thereof, to name just a few examples. In an embodiment, remote control 110 wirelessly communicates with media device 106 and/or display device 108 using cellular, Bluetooth, infrared, etc., or any combination thereof. Remote control 110 may include a microphone 112, which is further described below.

Multimedia environment 102 may include a plurality of content servers 120 (also called content providers, channels or sources 120). Although only one content server 120 is shown in FIG. 1, in practice multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to content 122. Metadata 124 may also or alternatively include one or more indexes of content 122, such as but not limited to a trick mode index.

Multimedia environment 102 may include one or more system servers 126. System servers 126 may operate to support media devices 106 from the cloud. It is noted that the structural and functional aspects of system servers 126 may wholly or partially exist in the same or different ones of system servers 126.

Media devices 106 may exist in thousands or millions of media systems 104. Accordingly, media devices 106 may lend themselves to crowdsourcing embodiments and, thus, system servers 126 may include one or more crowdsource servers 128.

For example, using information received from media devices 106 in the thousands and millions of media systems 104, crowdsource server(s) 128 may identify similarities and overlaps between closed captioning requests issued by different users 132 watching a particular movie. Based on such information, crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, crowdsource server(s) 128 may operate to cause closed captioning to be automatically turned on and/or off during future streamings of the movie.

System servers 126 may also include an audio command processing module 130. As noted above, remote control 110 may include microphone 112. Microphone 112 may receive audio data from users 132 (as well as other sources, such as the display device 108). In some embodiments, media device 106 may be audio responsive, and the audio data may represent verbal commands from user 132 to control media device 106 as well as other components in media system 104, such as display device 108.

In some embodiments, the audio data received by microphone 112 in remote control 110 is transferred to media device 106, which is then forwarded to audio command processing module 130 in system servers 126. Audio command processing module 130 may operate to process and analyze the received audio data to recognize user 132's verbal command. Audio command processing module 130 may then forward the verbal command back to media device 106 for processing.

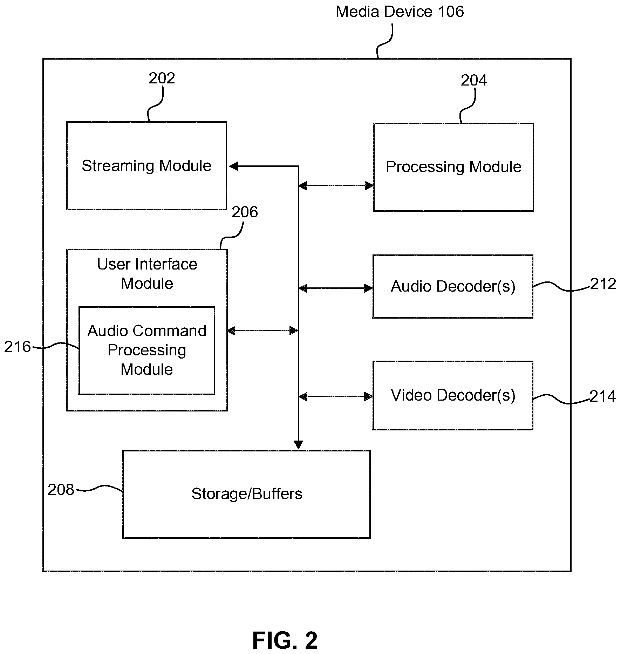

In some embodiments, the audio data may be alternatively or additionally processed and analyzed by an audio command processing module 216 in media device 106 (see FIG. 2). Media device 106 and system servers 126 may then cooperate to pick one of the verbal commands to process (either the verbal command recognized by audio command processing module 130 in system servers 126, or the verbal command recognized by audio command processing module 216 in media device 106).

FIG. 2 illustrates a block diagram of an example media device 106, according to some embodiments. Media device 106 may include a streaming module 202, a processing module 204, storage/buffers 208, and a user interface module 206. As described above, user interface module 206 may include audio command processing module 216.

Media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, user 132 may interact with media device 106 via, for example, remote control 110. For example, user 132 may use remote control 110 to interact with user interface module 206 of media device 106 to select content, such as a movie, TV show, music, book, application, game, etc. Streaming module 202 of media device 106 may request the selected content from content server(s) 120 over network 118. Content server(s) 120 may transmit the requested content to streaming module 202. Media device 106 may transmit the received content to display device 108 for playback to user 132.

In streaming embodiments, streaming module 202 may transmit the content to display device 108 in real time or near real time as it receives such content from content server(s) 120. In non-streaming embodiments, media device 106 may store the content received from content server(s) 120 in storage/buffers 208 for later playback on display device 108.

### Multi-Alert-Level Monitoring and Alerting Service for Premises Using IoT Devices

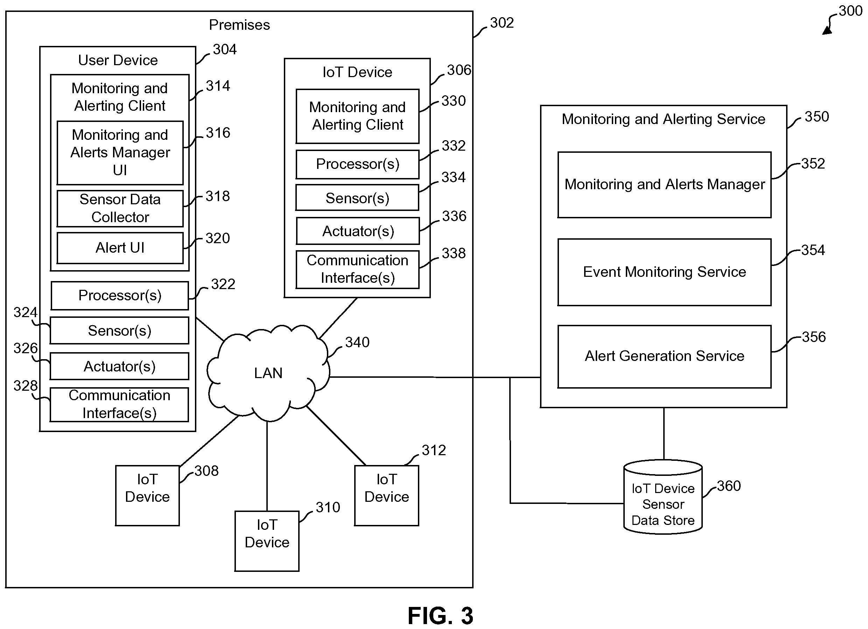

FIG. 3 illustrates a block diagram of a system 300 for providing a multi-alert-level monitoring and alerting service for a premises comprising a set of IoT devices, according to some embodiments. As shown in FIG. 3, system 300 includes a premises 302 and a monitoring and alerting service 350. Each of these aspects of system 300 will now be described.

### Premises 302

As shown in FIG. 3, system 300 includes a premises 302 in which a plurality of IoT devices 306, 308, 310 and 312 are present. Premises 302 may comprise, for example and without limitation, a home, an office, a building, a factory, a warehouse, a bar, a restaurant, a movie theater, a stadium, an auditorium, a car, a bus, a boat, or any other structure, location or space in which IoT devices may be present. Although only four IoT devices are shown as being present in premises 302 for the sake of illustration, it should be understood that premises 302 may include any number of IoT devices, including tens, hundreds or even thousands of IoT devices.

As used herein, the term "IoT device" is intended to broadly encompass any device that is capable of engaging in digital communication with another device. For example, a device that can digitally communicate with another device can comprise an IoT device, as that term is used herein, even if such communication does not occur over the Internet.

Each of IoT devices 306, 308, 310 and 312 may comprise a device such as, for example, a smart phone, a laptop computer, a notebook computer, a tablet computer, a netbook, a desktop computer, a video game console, a set-top box, or an OTT streaming media player. Furthermore, each of IoT devices 306, 308, 310 and 312 may comprise a so-called "smart home" device such as, for example, a smart lightbulb, a smart switch, a smart refrigerator, a smart washing machine, a smart dryer, a smart coffeemaker, a smart alarm clock, a smart smoke alarm, a smart carbon monoxide detector, a smart security sensor, a smart doorbell camera, a smart indoor or outdoor camera, a smart door lock, a smart thermostat, a smart plug, a smart television, a smart speaker, a smart remote controller, or a voice controller. Still further, each of IoT devices 306, 308, 310 and 312 may comprise a wearable device such as a watch, a fitness tracker, a health monitor, a smart pacemaker, or an extended reality headset. However, these are only examples and are not intended to be limiting.

IoT devices 306, 308, 310 and 312 may be communicatively connected to a local area network (LAN) 340 via a suitable wired and/or wireless connection. LAN 340 may be implemented using a hub-and-spoke or star topology. For example, in accordance with such an implementation, each of IoT devices 306, 308, 310 and 312 may be connected to a router via a corresponding Ethernet cable, wireless access point (AP), or IoT device hub. The router may include a modem that enables the router to act as an interface between entities connected to LAN 340 and an external wide area network (WAN), such as the Internet. Alternatively, LAN 340 may be implemented using a full or partial mesh network topology. In accordance with a full mesh network topology, each IoT device in the set of IoT devices in premises 302 may be directly connected to each of the other IoT devices in the premises such that it can communicate therewith without a router. In accordance with a partial mesh network technology, only some of the IoT devices in premises 302 may be directly connected to other ones of the IoT devices, and indirect communication between unconnected IoT device pairs may be carried out through one or more intervening devices. A mesh network implementation of LAN 340 may likewise be connected to an external WAN, such as the Internet, via a router. However, these are examples only, and other techniques for implementing LAN 340 may be used.

As further shown in FIG. 3, IoT device 306 may comprise one or more processors 332, one or more sensors 334, one or more actuators 336, and one or more communication interfaces 338. Processor(s) 332 may comprise one or more central processing units (CPUs), microcontrollers, microprocessors, signal processors, ASICs (application specific integrated circuits), and/or other physical hardware processor circuits for performing tasks such as program execution, signal coding, data processing, input/output processing, power control, and/or other functions.

Sensor(s) 334 may comprise one or more devices or systems for detecting and responding to (e.g., measuring, recording) objects and events in the physical environment of IoT device 306. By way of example only and without limitation, sensor(s) 334 may include one or more of a camera or other optical sensor, a microphone or other audio sensor, a radar system, a LiDAR system, a Wi-Fi sensing system, a Global Positioning System (GPS) sensor, a temperature sensor, a pressure sensor, a proximity sensor, an accelerometer, a gyroscope, a magnetometer, an infrared sensor, a gas sensor, or a smoke sensor.

Actuator(s) 336 may comprise one or more devices or systems that are operable to effect a change in the physical environment of IoT device 306. By way of example only and without limitation, actuator(s) 336 may comprise a component that connects a device to a power source, disconnects a device from a power source, switches a light on or off, adjusts a brightness or a color of a light, turns an audible alarm on or off, adjusts the volume of an audible alarm, initiates a call to a security service, turns a heating or cooling system on or off, adjusts a target temperature associated with a heating or cooling system, locks or unlocks a door, rings a doorbell, initiates capture of video or audio, changes a channel or configuration of a television, adjusts the volume of an audio output device, or the like.

Communication interface(s) 338 may comprise components suitable for enabling IoT device 306 to wirelessly communicate with other devices via a corresponding wireless protocol. Communication interface(s) 338 may include, for example and without limitation, one or more of: a Wi-Fi interface that enables IoT device 306 to wirelessly communicate with an access point or other remote Wi-Fi-capable device according to one or more of the wireless network protocols based on the IEEE (Institute of Electrical and Electronics Engineers) 802.11 family of standards, a cellular interface that enables IoT device 306 to wirelessly communicate with remote devices via one or more cellular networks, a Bluetooth interface that enables IoT device 306 to engage in short-range wireless communication with other Bluetooth-enabled devices, or a Zigbee interface that enables IoT device 306 to wirelessly communicate with other Zigbee-enabled devices.

Communication interface(s) 338 may additionally or alternatively comprise components suitable for enabling IoT device 306 to communicate over a wired connection with other devices via a corresponding wired protocol, such as a Universal Serial Bus (USB) connection and protocol or Ethernet connection and protocol.

As further shown in FIG. 3, IoT device 306 may include a monitoring and alerting client 330. The features of monitoring and alerting client 330 will be described below in reference to monitoring and alerting client 314 of user device 304. Monitoring and alerting client 330 may be implemented as processing logic that can comprise hardware (e.g., circuitry, dedicated logic, programmable logic, microcode, etc.), software (e.g., instructions executing on a processing device), or a combination thereof. Monitoring and alerting client 330 may comprise a software application that is executed by processor(s) 332 of IoT device 306.

Each of IoT devices 308, 310 and 312 may include similar components to those shown with respect to IoT device 306. Thus, for example, each of IoT device 308, 310 and 312 may include one or more processors, one or more sensors, one or more actuators, one or more communication interfaces, and a monitoring and alerting client.

User device 304 is intended to represent a personal computing device or media device associated with a user. For example, in an embodiment in which multimedia environment is present in premises 302, user device 304 may comprise media device 106, and a user interface of user device 304 may be presented to a user via display device 108. User device 304 may also comprise a smart phone, a laptop computer, a notebook computer, a tablet computer, a netbook, a desktop computer, a video game console, or a wearable device (e.g., a smart watch or extended reality headset). User device 304 may include one or more processors 322, one or more sensor(s) 324, one or more actuators 326, one or more communication interfaces 328, and a monitoring and alerting client 314.

Processor(s) 322 may comprise one or more CPUs, microcontrollers, microprocessors, signal processors, ASICs, and/or other physical hardware processor circuits for performing tasks such as program execution, signal coding, data processing, input/output processing, power control, and/or other functions.

Sensor(s) 324 may comprise one or more devices or systems for detecting and responding to (e.g., measuring, recording) objects and events in the physical environment of user device 304. Sensor(s) 324 may include, for example, one or more of the sensor types previously described in reference to sensor(s) 334 of IoT device 306.

Actuator(s) 326 may comprise one or more devices or systems that are operable to effect a change in the physical environment of user device 304. Actuator(s) 326 may comprise, for example, one or more of the actuator types previously described in reference to actuator(s) 336 of IoT device 306.

Communication interface(s) 328 may comprise components suitable for enabling user device 304 to communicate with other devices via a wired or wireless communication medium using a corresponding wired or wireless communication protocol. Communication interface(s) 328 may comprise, for example, one or more of the communication interface types previously described in reference to communication interface(s) 338 of IoT device 306.

Monitoring and alerting client 314 may be configured to interact with monitoring and alerting service 350 to enable IoT device-based monitoring and alerting services to be provided for premises 302. Monitoring and alerting client 314 may be implemented as processing logic that can comprise hardware (e.g., circuitry, dedicated logic, programmable logic, microcode, etc.), software (e.g., instructions executing on a processing device), or a combination thereof. Monitoring and alerting client 314 may comprise a software application that is executed by processor(s) 322 of user device 304. As shown in FIG. 3, monitoring and alerting client 314 may include a monitoring and alerts manager user interface (UI) 316, a sensor data collector 318, and an alert UI 320.

Monitoring and alerts manager UI 316 may comprise a UI that enables a user to interact with a monitoring and alerts manager 352 (described in more detail herein) of monitoring and alerting service 350 to specify one or more events to be monitored for by monitoring and alerting service 350 utilizing one or more of IoT devices 306, 308, 310 and 312. Monitoring and alerts manager UI 316 may also enable a user to interact with monitoring and alerts manager 352 to specify how alerts should be issued by event monitoring and alerting service 350. Still further, monitoring and alerts manager UI 316 may enable a user to interact with monitoring and alerts manager 352 to specify one or more events that, when detected, will cause an alert level associated with premises 302 to be modified (e.g., elevated). Monitoring and alerts manager UI 316 may also enable a user to associate certain monitored events and/or alert methods with different alert levels of premises 302. Depending upon the implementation, monitoring and alerts manager UI 316 may comprise a graphical UI (GUI), a menu-driven UI, a touch UI, a voice UI, a form-based UI, a natural language UI, or the like.

Sensor data collector 318 may be configured to collect sensor data from sensor(s) 324 of user device 304 and provide such sensor data to monitoring and alerting service 350 for use thereby in monitoring for one or more events. For example, sensor data collector 318 may continuously, periodically or intermittently collect sensor data from sensor(s) 324 and provide such sensor data to monitoring and alerting service 350 to enable event monitoring thereby. Sensor data collector 318 may provide the sensor data to monitoring and alerting service 350 by transmitting the sensor data for storage in an IoT device sensor data store 360 that is accessible to both user device 304 and monitoring and alerting service 350.

Alert UI 320 may be configured to generate an alert responsive to a communication from monitoring and alerting service 350. Such communication may be generated by monitoring and alerting service 350, for example, when an event is detected thereby. The type(s) of alerts that may be generated by alert UI 320 may depend upon a type and/or feature set of user device 304 upon which alert UI 320 is installed. For example, alerts may be audible (e.g., generated using one or more speakers), visual (e.g., generated using one or more lights or by rendering text, an image or video to a display), haptic (e.g., generated using a vibration motor or other haptic actuator), or the like.

Monitoring and alerting client 330 of IoT device 306 may include components similar to those of monitoring and alerting client 314. Thus, monitoring and alerting client 330 may include one or more of (i) a monitoring and alerts manager UI that enables a user to interact with monitoring and alerts manager 352 of monitoring and alerting service 350 to specify one or more events to be monitored for, to specify how alerts should be issued, to specify one or more events that will cause a change in an alert level of premises 302, or to assign one or more monitored events or alert methods to a particular alert level, (ii) a sensor data collector that collects sensor data from sensor(s) 334 of IoT device 306 and provides such sensor data to monitoring and alerting service 350 for use thereby in monitoring for one or more events (e.g., by storing such sensor data in IoT device sensor data store 360), and (iii) an alert UI that may generate an alert responsive to a communication from monitoring and alerting service 350. As was previously noted, each of IoT devices 308, 310 and 312 may also include a monitoring and alerting client and such client may include similar components to, and perform operations similar to those performed by, monitoring and alerting client 314 and monitoring and alerting client 330.

Although only a single user device 304 is shown in FIG. 3, it is to be understood that multiple user devices may be present in premises 302, and each such user device may be configured in a like manner to user device 304.

Additionally, although only a single premises 302, with associated user device 304 and set of IoT devices 306, 308, 310 and 312, is shown in FIG. 3 for the sake of simplicity, it is to be understood that system 300 may include any number of premises (including hundreds, thousands, tens of thousands, hundreds of thousands, millions, or hundreds of millions of premises), each with its own user device(s) and IoT devices, and that monitoring and alerting service 350 may be used to provide IoT device-based monitoring and alerting services to each such premises utilizing the IoT devices respectively deployed therein.

### Monitoring and Alerting Service 350

As further shown in FIG. 3, system 300 includes monitoring and alerting service 350. Monitoring and alerting service 350 may be implemented as processing logic that can comprise hardware (e.g., circuitry, dedicated logic, programmable logic, microcode, etc.), software (e.g., instructions executing on a processing device), or a combination thereof. Monitoring and alerting service 350 may be implemented by one or more devices (e.g., one or more servers) that are remote from premises 302 but communicatively connected thereto (e.g., communicatively connected to LAN 340) via one or more networks. Alternatively, monitoring and alerting service 350 may be implemented by a device within premises 302, such as by user device 304, or one of IoT devices 306, 308, 310 and 312. Still further, monitoring and alerting service 350 may be implemented in a distributed manner by two or more remotely located and/or local devices.

Monitoring and alerting service 350 may comprise a monitoring and alerts manager 352. Monitoring and alerts manager 352 may enable a user (e.g., a user associated with premises 302) to specify one or more events to be monitored for by monitoring and alerting service 350 utilizing at least one or more of IoT devices 306, 308, 310, and 312. For example, a user may interact with monitoring and alerts manager 352 via monitoring and alerts manager UI 316 to specify one or more events to be monitored for by monitoring and alerting service 350 utilizing at least one or more of IoT devices 306, 308, 310, and 312.

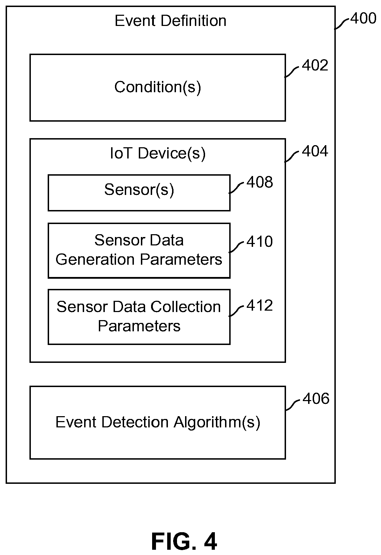

An event may be any set of conditions and/or phenomena that may be monitored for using at least one or more IoT devices in a premises (e.g., one or more of IoT devices 306, 308, 310 and 312 in premises 302). FIG. 4 illustrates a block diagram of an example event definition 400 that defines an event that may be monitored for by monitoring and alerting service 350, according to some embodiments. Event definition 400 is presented herein by way of example only, and is not intended to be limiting. Persons skilled in the relevant art(s) will appreciate that an event may be defined in other ways than that depicted in FIG. 4. As shown in FIG. 4, event definition 400 comprises one or more conditions 402, one or more IoT devices 404, and one or more event detection algorithms 406.

Condition(s) 402 may represent a set of factors or circumstances that must exist for the event defined by event definition 400 to be deemed detected or to have occurred. Condition(s) 402 may also be thought of as a set of triggers for the event defined by event definition 400. Condition(s) 402 may be monitored for using at least one or more IoT devices in a premises (e.g., one or more of IoT devices 306, 308, 310 and 312 in premises 302). Condition(s) 402 may include, for example and without limitation, one or more of: a state of an object or person (e.g., garage door is open, baby is sleeping, smoke alarm is beeping), a presence or non-presence of an object or person (e.g., package on doorstep, water in basement, user is home, user is not home, car is not in garage, boat is not at dock), or an existence or non-existence of a phenomenon (e.g., temperature is above or below a certain threshold, light is or is not coming through a window, smoke is detected or not detected, carbon dioxide is detected or not detected, a certain sound is audible or inaudible).

Condition(s) 402 may be temporal in nature. For example and without limitation, condition(s) 402 may include temporal factors or circumstance such as user is sleeping past a certain time, person detected on property at night, lights are on during daylight hours, garbage not put out at customary time, person in house while homeowner is on vacation, etc. Temporal conditions may entail phenomenon occurring within or outside of prescribed time windows, different phenomena occurring concurrently or within a particular time window, or phenomenon following or deviating from temporal patterns. Still other types of temporal condition(s) may be included within condition(s) 402.

Condition(s) 402 may also include one or more factors or circumstances that may be determined based on data obtained from one or more data sources that are external to premises 302. For example, condition(s) 402 may include one or more factors or circumstances that may be determined based on data obtained from the world wide web or a third-party service. Examples of such externally-obtained data may include, but are by no means limited to, an indication of inclement or dangerous weather published by a weather service, an incident logged by a remote home security service, an alert published by a governmental entity such as a law enforcement entity or a public health entity, an alert published by a social media application (e.g., a social media application for neighborhoods), a status of a person as indicated by a social networking service, an indication of product availability provided by an online shopping service, an indication of content availability provided by a streaming media service, or the like.

IoT device(s) 404 may represent a set of IoT devices that can be used to monitor for one or more of condition(s) 402. IoT device(s) 404 may be specified in generic terms (e.g., a smart doorbell) or in specific terms (e.g., a particular manufacturer and model of smart doorbell). For each IoT device 404 included in event definition 400, the following information may be further specified: one or more sensor(s) 408 of the IoT device that can generate sensor data to be used to monitor for one or more of condition(s) 402, a set of sensor data generation parameters 410 that specify how each such sensor is to be operated to generate such sensor data, and a set of sensor data collection parameters 412 that specify how such sensor data is to be collected from each such sensor.

Event detection algorithm(s) 406 may represent a set of algorithms that can be used to determine whether one or more of condition(s) 402 exists. For example, event detection algorithm(s) 406 may include a trained machine learning (ML) model that processes audio captured by an IoT device to determine if the sound of a smoke alarm is detected, or a trained ML model that processes video or images captured by an IoT device to detect if a package is on a doorstep or if a person is in a room.

Monitoring and alerts manager 352 may enable a user to select an event for monitoring from among a set of predefined events, wherein each predefined event is represented by a corresponding event definition 400. For example, monitoring and alerts manager 352 may present a set of predefined events to a user via monitoring and alerts manager UI 316 and the user may select one or more of the predefined events from the set to initiate monitoring thereof. As another example, a user may provide natural language input (e.g., either spoken or typed) via monitoring and alerts manager UI 316, and monitoring and alerts manager 352 may utilize a large language model (LLM) or other suitable model/algorithm to interpret such natural language input to determine that the user has requested monitoring of one or more events within a set of predefined events.

Predefined events may include, for example, a set of default event types provided by monitoring and alerting service 350. Predefined events may also comprise events defined by or on behalf of other users or for other premises, which are then shared with multiple users for use in multiple premises.

Monitoring and alerts manager 352 may also operate to generate new events that are eligible for monitoring based on user input and/or sensor data collected from IoT device(s) associated with a user. For example, monitoring and alerts manager 352 may receive user input and analyze such user input to define a new event whose occurrence can be monitored for by monitoring and alerting service 350. Such user input may be provided, for example, via monitoring and alerts manager UI 316. For example, monitoring and alerts manager UI may include a GUI that enables a user to define a new event. Such GUI may enable the user to define the new event in accordance with event definition 400 by specifying one or more of condition(s) 402 that will trigger the event, IoT device(s) 404 that will be used to monitor for one or more of condition(s) 402, and/or event detection algorithm(s) 406 that will be used to determine if one or more of condition(s) 402 has occurred.

In accordance with an implementation in which monitoring and alerts manager UI 316 comprises a natural language UI, a user may provide natural language input (e.g., either spoken or typed) via monitoring and alerts manager UI 316, and monitoring and alerts manager 352 may utilize an LLM or other suitable model/algorithm to interpret such input to generate a definition (e.g., event definition 400) of a new event to be monitored for by monitoring and alerting service 350. For example, a user may state or type "alert me when the deer are eating my flowers." Based on this natural language input, monitoring and alerts manager 352 may generate an event definition 400 that includes a condition 402 "the deer are eating my flowers", an IoT device 404 comprising a smart security camera having a field of view that includes the aforementioned flowers, and an event detection algorithm 406 comprising a model for detecting deer based on images collected from the smart security camera. This is merely one example, however, and numerous other event definitions may be generated based on different user input.

In certain implementations in which monitoring for the new event entails performing object detection with respect to images (e.g., detecting a deer eating flowers in images captured by a video camera), the natural language input used to define the new event, or a portion thereof, may also be used as a prompt to drive an object detection algorithm, such as an open-vocabulary object detection (OVOD) algorithm. As will be appreciated by persons skilled in the relevant art(s), an OVOD algorithm may advantageously be used to detect novel object classes (e.g., object classes specified by a user via natural language) that generalize beyond a limited number of base classes labeled during the training phase of the algorithm. Thus, for example, based on the natural language input "alert me when the deer are eating my flowers", monitoring and alerts manager 352 may generate an event definition 400 that includes a condition 402 "the dear are eating my flowers" and utilize as an event detection algorithm 406 an OVOD algorithm that is configured to detect "deer" and "flowers" in video or image data even though such OVOD algorithm may not have been trained on images labeled "deer" or "flowers". Some examples of OVOD algorithms known in the art include those described in A. Kirillov et al., "Segment Anything", arXiv:2304.02643v1 (2023), X. Zhao et al., "Fast Segment Anything", arXiv:2306.12156v1 (2023), and C. Zhang et al., "Faster Segment Anything: Towards Lightweight SAM for Mobile Applications", arXiv:2306.14289v2 (2023).

Monitoring and alerts manager 352 may also analyze sensor data collected from a user's IoT devices to define a new event whose occurrence can be monitored for by monitoring and alerting service 350. For example, sensor data that is collected from one or more of IoT devices 306, 308, 310 and 312 and stored in IoT device sensor data store 360 may be analyzed by monitoring and alerts manager 352 to define a new event whose occurrence can be monitored for by monitoring and alerting service 350. For example, monitoring and alerts manager 352 may analyze the sensor data to detect an anomalous set of conditions and define the new event based at least on the anomalous set of conditions. An anomalous condition may include a condition that deviates from an established norm or pattern. As another example, monitoring and alerts manager 352 may analyze the sensor data to detect a set of conditions that are associated with a standard event type and define the new event based at least on the set of conditions associated with the standard event type. A standard event type may be a type of event about which some, many or most users would wish to be alerted, regardless of whether such event is anomalous. Standard event types may include, for example and without limitation, events like person or package at a front door, doorbell ringing, garage door opening, or the like.

As part of defining a new event, monitoring and alerts manager 352 may define a set of event detection algorithms 406 for detecting one or more conditions in a set of conditions 402 associated with the new event. As noted above, the set of event detection algorithm(s) 406 may include a trained ML model that is configured to detect a particular condition (e.g., a trained ML model that is configured to detect a deer based on video data).

Monitoring and alerting service 350 may further comprise an event monitoring service 354. Event monitoring service 354 may operate to monitor for an occurrence of an event for which monitoring has been activated by monitoring and alerting service 350 (e.g., either automatically or based on user input as described above). For example, event monitoring service 354 may monitor for an occurrence of an event defined in accordance with event definition 400. In further accordance with such an example, event monitoring service 354 may utilize sensor data collected from one or more IoT devices of a premises (e.g., one or more of IoT devices 306, 308, 310 or 312 of premises 302) to monitor for one or more condition(s) 402 that indicate that the event has occurred. Event monitoring service 354 may determine which IoT devices to use for monitoring based on set of IoT devices 404 associated with event definition 400. Furthermore, event monitoring service 354 may utilize set of event detection algorithms 406 (e.g., one or more trained ML models) to detect whether one or more of condition(s) 402 has been satisfied.

Event monitoring service 354 may detect the occurrence of an event in real time or near real time based on sensor data that is collected from the IoT devices of the premises. As noted above, each IoT device may include a sensor data collector that is configured to provide sensor data to event monitoring service 354 on a continuous, periodic or intermittent basis.

Event monitoring service 354 may determine an alert level currently associated with premises 302 and perform event monitoring in accordance with the determined alert level. For example, premises 302 may be determined to be at one of a plurality of different alert levels. The number of alert levels and the definition of each level may vary depending upon the implementation. For example and without limitation, the alert levels associated with premises 302 may consist of a "normal" alert level and a "high" alert level. As another non-limiting example, the alert levels associated with premises 302 may consist of a "green" or "normal" alert level, a "yellow" or "elevated" alert level, an "orange" or "high" alert level, and a "red" or "severe" alert level. Still other alert level systems may be used.

Event monitoring service 354 may determine the alert level currently associated with premises 302 in a variety of ways and based on a variety of factors. For example, event monitoring service 354 may be configured to operate at a first alert level (e.g., "normal") until one or more triggering events are detected thereby. In response to the detection of the triggering event(s), event monitoring service 354 may raise the alert level from the first alert level (e.g., "normal") to a second alert level (e.g., "elevated" or "high"). For example, a triggering event that raises the alert level may be detecting an unknown person in a home. However, this is only one example, and numerous examples of triggering events will be provided below.

The various alert levels associated with premises 302 and the type and/or number of triggering events that may cause event monitoring service 354 to modify the alert level of premises 302 may be fixed or configurable aspects of monitoring and alerting service 350. In an example implementation in which these aspects are configurable, a user may interact with monitoring and alerts manager UI 316 to select or otherwise specify one or more of: (i) the number of alert levels; (ii) a name or identifier associated with each alert level; and (iii) a type and/or number of triggering events that will cause monitoring and alerting service 350 to transition between various alert levels.

Event monitoring service 354 may monitor for and detect triggering events in the same manner that it monitors for and detects other events as was previously described. Thus, for example, event monitoring service 354 may utilize sensor data collected from one or more of IoT devices 306, 308, 310 or 312 of premises 302 to monitor for one or more condition(s) that indicate that a triggering event has occurred. Additionally, event monitoring service 354 may detect that a triggering event has occurred based on information obtained from one or more data sources external to premises 302, such as information obtained from the world wide web or a third-party service. Event monitoring service 354 may also detect that a triggering event has occurred based on a combination of sensor data collected from one or more of IoT devices 306, 308, 310 or 312 within premises 302 and data obtained from one or more data sources that are external to premises 302.

In certain implementations, a user may interact with monitoring and alerts manager UI 316 to modify the alert level currently associated with premises 302. For example, in an embodiment in which monitoring and alerts manager UI 316 comprises a GUI, a user may interact with a suitable GUI control to select the desired alert level. As another example, in an embodiment in which monitoring and alerts manager UI 316 comprises a natural language UI, a user may provide natural language input (e.g., either spoken or typed) via monitoring and alerts manager UI 316, wherein such natural language input indicates the desired alert level. Monitoring and alerts manager 352 may then adjust the alert level associated with premises 302 accordingly.

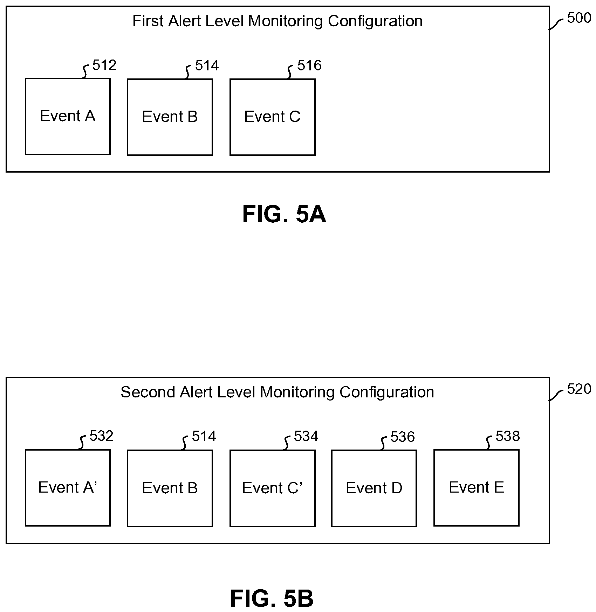

Event monitoring service 354 may be configured to perform event monitoring in a manner that is dependent upon the current alert level associated with premises 302. Thus, the manner of event monitoring performed by event monitoring service 354 may change when the alert level associated with premises 302 changes. This concept will now be further described in reference to FIGS. 5A and 5B.

FIG. 5A illustrates a monitoring configuration 500 for a first alert level associated with premises 302. Monitoring configuration 500 specifies a set of events to be monitored for by event monitoring service 354 when the alert level associated with premises 302 is the first alert level. As shown in FIG. 5A, the set of events includes an event A (512), an event B (514), and an event C (516).

FIG. 5B illustrates a monitoring configuration 520 for a second alert level associated with premises 302. Monitoring configuration 520 specifies a set of events to be monitored for by event monitoring service 354 when the alert level associated with premises 302 is the second alert level. As shown in FIG. 5B, the set of events includes an event A' (532), event B (514), an event C' (534), an event D (536) and an event E (538).

As can be seen from FIGS. 5A and 5B, when the alert level associated with premises 302 is at the second alert level, event monitoring service 354 will activate monitoring for two additional events (event D and event E) that were not monitored for when the alert level associated with premises 302 was the first alert level. Thus, a modification (e.g., elevation) of the alert level may cause event monitoring service 354 to activate monitoring for additional events. For example, at the first alert level (e.g., a normal alert level), event monitoring service 354 may not monitor for open windows in a house. However, if the alert level associated with premises 302 is elevated due to rain being detected (e.g., as a triggering event), then event monitoring service 354 may start monitoring for open windows in premises 302. In this way, a user can be alerted about windows being left open during a rain storm.

As can also be seen from FIGS. 5A and 5B, when the alert level associated with premises 302 is at the second alert level, the definition of certain events will be modified such that event monitoring service 354 will monitor for such events in a different manner. This is represented by event A (512) and event C (516) of first alert level monitoring configuration 500 being replaced by event A' (532) and event C' (534) of second alert level monitoring configuration 520, respectively. Modifying the definition of an event may comprise modifying one or more of the elements of event definition 400 as was previously described in reference to FIG. 4.

In particular, modifying the definition of an event may comprise modifying condition(s) 402 that must exist for the event to be deemed detected or to have occurred. This may entail, for example, adding or removing a condition from set of conditions 402. For example, for event A to be deemed detected, conditions C₁, C₂ and C₃ may all need to exist (i.e., event detected when C₁ AND C₂ AND C₃), whereas for event A' to be deemed detected only one of conditions C₁, C₂ and C₃ may need to exist (i.e., event detected when C₁ OR C₂ OR C₃). As another example, modifying condition(s) 402 may comprise modifying a threshold associated with one of condition(s) 402. For example, in order for event A to be deemed detected, a probability of a person being detected on a doorstep may be required to exceed 80%, but in order for event A' to be deemed detected, the probability of the person being detected on the doorstep may be required to exceed only 60%.

Modifying the definition of an event may also comprise modifying the set of IoT devices 404 that can be used to monitor for one or more of condition(s) 402. This may entail, for example and without limitation, adding additional IoT devices for monitoring for one or more of condition(s) 402. For example, event A may include a condition of detecting a person in premises 302 when an owner thereof is on vacation and such condition may be monitored for using a single IoT device in premises 302, whereas event A' may include the same condition but may monitor for that condition using multiple IoT devices in premises 302.

Modifying the definition of an event may also comprise modifying the set of sensors 408 utilized by an IoT device to monitor for one or more of condition(s) 402. For example, a particular IoT device may include multiple different sensors (e.g., a camera and a microphone). In further accordance with this example, monitoring for event A may comprise using only a single one of the multiple different sensors (e.g., a single one of the camera or microphone) to monitor for one or more of condition(s) 402, whereas monitoring for event A' may comprise using all of the multiple different sensors (e.g., both the camera and the microphone) to monitor for one or more of condition(s) 402.

Modifying the definition of an event may also comprise modifying certain sensor data generation parameters 410 that specify how a sensor is to be operated to generate sensor data used for event monitoring. This may entail, for example, modifying operating parameters associated with a sensor such as, but not limited to, a resolution, frame rate, or field of view of a video camera, a sensitivity or a dynamic range of a microphone, a direction of a directional microphone, a range of an IR sensor, radar system or LiDAR system, or the like. This may also entail, for example, modifying a physical environment in which a sensor operates. For example, this may entail turning on one or more lights so that a camera can capture color images in well-lit conditions, or turning off a noise-generating device to enable a microphone to better capture audio from other audio sources.

Modifying the definition of an event may also comprise modifying certain sensor data collection parameters 412 that specify how sensor data is to be collected from a sensor. This may entail, for example, modifying (e.g, increasing) a frequency at which sensor data is collected from a sensor, or modifying (e.g., increasing) an amount of data that is collected from a sensor.

Modifying sensor data collection parameters 412 may also entail adding or modifying a communication channel over which sensor data is collected from a sensor. For example, monitoring for event A may entail transmitting sensor data from IoT device 306 to monitoring and alerting service 350 over a single communication channel (e.g., a fiberoptic cable or coaxial cable network), whereas monitoring for event A' may entail sending sensor data from IoT device 306 to monitoring and alerting service 350 over multiple different communication channels (e.g., a fiberoptic/coaxial cable network, a cellular communication network, a satellite communication network, and a Digitial Subscriber Line (DSL) network). Modifying the communication channel over which sensor data is collected from a sensor may also entail switching from a relatively low-bandwidth communication channel to a relatively high-bandwidth communication channel. Modifying the communication channel over which sensor data is collected may also entail modifying the utilization of a communication channel over which the sensor data is collected (e.g., by preventing certain types of traffic over an internet connection) to improve the bandwidth thereof.

Modifying sensor data collection parameters 412 may also entail modifying how sensor data is stored or recorded. For example, modifying sensor data collection parameters 412 may entail recording sensor data to a new storage location for redundancy or other purposes. For example, monitoring for event A may entail storing sensor data collected from IoT device 306 to IoT device sensor data store 360 only, whereas monitoring for event A' may entail storing sensor data collected from IoT device 306 to local memory of IoT device 306, to local memory of one or more of IoT devices 308, 310, or 312, and/or to local memory of user device 304 instead of or in addition to storing such sensor data to IoT device sensor data store 360.

Modifying how sensor data is stored or recorded may also entail changing a duration for which sensor data is stored. For example, monitoring for event A may entail allowing sensor data that is collected from a sensor to be overwritten after a certain amount of time or after transmission to monitoring and alerting service 350, whereas monitoring for event A' may entail preserving such stored sensor data for a longer amount of time (e.g., until the alert level associated with premises 302 transitions back from the second alert level to the first alert level).

Modifying the definition of an event may also comprise modifying certain event detection algorithm(s) 406 that can be used to determine whether one or more of condition(s) 402 exists. For example, a different set of event detection algorithm(s) 406 may be used to determine whether one or more of condition(s) 402 exist when monitoring for event A than are used to determine whether such condition(s) exist when monitoring for event A'. For example a low-complexity model that consumes relatively few resources may be used when monitoring for event A, but a higher-complexity model that consumes greater resources but has a lower error rate may be used when monitoring for event A'.

The set of events that are monitored for at each alert level of premises 302 and the manner in which event monitoring is carried out at each alert level of premises 302 may be fixed or configurable aspects of monitoring and alerting service 350. In an example implementation in which these aspects are configurable, a user may interact with monitoring and alerts manager UI 316 to associate certain monitored events with different alert levels of premises 302 and/or modify how a particular event is monitored for at different alert levels of premises 302. Thus for example, a user could interact with monitoring and alerts manager UI 316 to set up first alert level monitoring configuration 500 of FIG. 5A and second alert level monitoring configuration 520 of FIG. 5B.

Monitoring and alerting service 350 may further comprise an alert generation service 356. Alert generation service 356 may cause an alert to be generated in response to the detection of an event by event monitoring service 354. For example, in response to the detection of an event by event monitoring service 354, alert generation service 356 may communicate with one or more devices (e.g., one or more of user device 304 or IoT devices 306, 308, 310, 312) to cause such device(s) to generate an alert via a suitable UI (e.g., alert UI 320).

Any of a wide variety of alert generating mechanisms may be used. As noted above, alerts may be audible (e.g., generated using one or more speakers), visual (e.g., generated using one or more lights or by rendering text, an image or video to a display), haptic (e.g., generated using a vibration motor or other haptic actuator), or the like. Alerts may comprise text messages, email messages, push notifications, or any other type of message or notification that may be transmitted to a device and perceived by a user. Alerts may be directed to users associated with a premises (e.g., homeowners, home occupants, business owners, office occupants) and/or to other entities such as emergency services (e.g., 911 services), home security companies, police departments, fire departments, or the like.

A user may interact with monitoring and alerts manager 352 via monitoring and alerts manager UI 316 to specify how alerts should be generated for particular events, groups of events or all events. A user may, for example, specify a preferred mode or channel for receiving alerts (e.g., an audible alarm generated by an IoT device within a premises vs. push notifications to a smart phone). A user may also specify multiple different modes or channels for receiving the same alert.

In certain implementations, a user can provide verbal or text (e.g., natural language) input and an interpreter (e.g., LLM-based interpreter) can be used to (i) define an event (conditions, eligible IoT devices/sensors, event detection algorithm); (ii) define an alert associated with the event; and (iii) activate monitoring for the event and generation of the alert based on a detection of the event.

In accordance with an implementation in which monitoring and alerts manager UI 316 comprises a natural language UI, a user may provide natural language input (e.g., either spoken or typed) via monitoring and alerts manager UI 316, and such natural language input may be interpreted to determine how an alert should be generated. Thus, for example, a user may state or type "send me a text message when the deer are eating my flowers" and monitoring and alerts manager 352 may thus determine that a text message should be sent to the user's smart phone when the event of a deer eating the flowers is detected.

Alert generation service 356 may determine the manner in which to generate an alert automatically (e.g., without user input). For instance, alert generation service 356 may determine a context of a user at a time when an alert is to be generated and then determine the manner in which to generate the alert based on the context of the user. Alert generation service 356 may determine the manner in which to generate the alert based on the context of the user by selecting one or more devices from among a plurality of devices capable of generating the alert (e.g., user device 304 and IoT devices 306, 308, 310, 312) based on the context of the user, and generate the alert via the selected one or more devices.

In further accordance with this example, alert generation service 356 may determine a location of a user at a time an alert is to be generated (e.g., based on GPS sensor data collected from user device 304 or on video and/or audio data collected from one or more of IoT devices 306, 308, 310 or 312) and select which device(s) will generate the alert based on the user's location. In some implementations, alert generation service 356 may cause the alert to be generated by the IoT device that is determined to be closest to the location of the user in premises 302, or, if the user is determined to be located outside of premises 302, alert generation service 356 may cause the alert to be sent to the user's smart phone or smart watch.

In still further accordance with this example, alert generation service 356 may determine that a user is interacting with a particular device at a time an alert is to be generated and, as a result, select the particular device for generating the alert. For instance, alert generation service 356 may determine that a user proximate to or watching a smart television at the time the alert is to be generated and, as a result, cause the alert to be presented via the smart television. If the event is a person on the doorstep as detected by a smart video camera, alert generation service 356 may generate the alert via the smart television by presenting a video feed from the smart video camera via the display of the smart television. Alternatively, alert generation service 356 may cause a remote control associated with the smart television to generate a doorbell sound when a person is detected on a front doorstep or when a person presses a doorbell button.

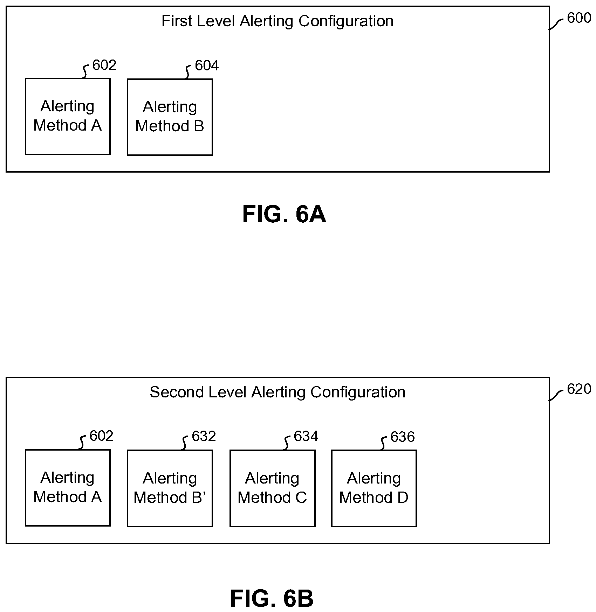

As discussed above, event monitoring service 354 may determine an alert level currently associated with premises 302. Alert generation service 356 may be configured to generate alerts in a manner that is dependent upon the current alert level associated with premises 302. Thus, the manner in which alerts are generated by alert generation service 356 may change when the alert level associated with premises 302 changes. This concept will now be further described in reference to FIGS. 6A and 6B.

FIG. 6A illustrates an alerting configuration 600 for a first alert level associated with premises 302. Alerting configuration 600 specifies a set of alerting methods to be used by alert generation service 356 when the alert level associated with premises 302 is the first alert level. As shown in FIG. 6A, the set of alerting methods includes an alerting method A (602) and an alerting method B (604).

FIG. 6B illustrates an alerting configuration 620 for a second alert level associated with premises 302. Alerting configuration 620 specifies a set of alerting methods to be used by alert generation service 356 when the alert level associated with premises 302 is the second alert level. As shown in FIG. 6B, the set of alerting methods includes alerting method A (602), alerting method B' (632), alerting method C (634) and alerting method D (636).

As can be seen from FIGS. 6A and 6B, when the alert level associated with premises 302 is at the second alert level, alert generation service 356 will activate two additional alerting methods (alerting method C and alerting method D) that were not utilized for alert generation for when the alert level associated with premises 302 was the first alert level. Thus, a modification (e.g., elevation) of the alert level may cause alert generation service 356 to activate additional alerting methods. For example, at the first alert level (e.g., a normal alert level), alert generation service 356 may only generate an alert by sending a push notification to a user device (e.g., user device 304). However, if the alert level associated with premises 302 is elevated (e.g., due to a triggering event), then alert generation service 356 may generate an additional alert in the form of an audible alarm sounded by an IoT device in premises 302 (e.g., any of IoT devices 306, 308, 310 or 312).

As can also be seen from FIGS. 6A and 6B, when the alert level associated with premises 302 is at the second alert level, the manner in which certain alerting methods are implemented by alert generation service 356 may be modified. This is represented by alerting method B (604) of first alert level alerting configuration 600 being replaced by alerting method B' (632) of second alert level alerting configuration 620.

Modifying the manner in which an alerting method is implemented may be carried out in a variety of ways. For example, modifying the manner in which an alerting method is implemented may entail sending a notification to a user device (e.g., user device 304) over additional or different communication channels at the second alert level as compared to the first alert level. As another example, modifying the manner in which an alerting method is implemented may entail sending additional information in a notification at the second alert level than would be included in the notification at the first alert level. As yet another example, modifying the manner in which an alerting method is implemented may entail raising a volume of an alarm from a first level to a second level when the alert level is changed from the first alert level to the second alert level. As still another example, modifying the manner in which an alerting method is implemented may entail increasing a frequency with which an alert is generated. However, these are merely a few examples and alert generation service 356 may modify the manner in which an alerting method is implemented based on alert level in numerous other ways.

The alerting methods that are utilized by alert generation service 356 at each alert level of premises 302 and the manner in which such alerting methods are implemented at each alert level of premises 302 may be fixed or configurable aspects of monitoring and alerting service 350. In an example implementation in which these aspects are configurable, a user may interact with monitoring and alerts manager UI 316 to associate certain alerting methods with different alert levels of premises 302 and/or modify how a particular alerting method is utilized at different alert levels of premises 302. Thus for example, a user could interact with monitoring and alerts manager UI 316 to set up first alert level alerting configuration 600 of FIG. 6A and second alert level alerting configuration 620 of FIG. 6B.

As demonstrated by the foregoing description, monitoring and alerting service 350 may advantageously perform event monitoring and alert generation in a manner that is dependent upon an alert level that is associated with premises 302. For example, monitoring and alerting service 350 may advantageously utilize sensor data collected from one or more of IoT devices 306, 308, 310 and 312 in premises 302, as well as data from other sources, to determine that an alert level associated with premises 302 should be elevated and elevate the alert level accordingly. Based on the elevation of the alert level, monitoring and alerting service 350 may dynamically modify a manner in which the IoT devices in premises 302 as well as monitoring and alerting service 350 itself are used to perform monitoring and alerting, even though such changes may increase resource utilization and/or incur a higher false positive rate. For example and without limitation, in response to the elevation of the alert level, monitoring and alerting service 350 may dynamically modify the operation of the IoT devices in premises 302 to become more sensitive to detecting certain types of events. As another non-limiting example, in response to the elevation of the alert level, monitoring and alerting service 350 may dynamically modify the manner in which monitoring and alerting service 350 generates alerts so that alerts are generated more aggressively.

Various example applications and use case scenarios that may be implemented in accordance with the above-described multi-alert-level monitoring and alerting service 350 will now be presented. These example applications and use case scenarios are presented herein for the sake of illustration only and are not intended to be limiting.

For example, in one scenario, event monitoring service 354 may detect glass breaking in premises 302 (e.g., based on sensor data collected from a glass break sensor or other IoT device in premises 302) and based on such detection, elevate the alert level associated with premises 302. Based on the elevation of the alert level associated with premises 302, alert monitoring and detection service 350 may start monitoring for additional types of events and/or modify how certain events are monitored for (e.g., to increase detection sensitivity). For example, battery-operated cameras or other power constrained IoT devices that would normally not be operating because they are in a power save mode may be activated to monitor for events in response to the elevation of the alert level.

In another example scenario, a detection of an event (e.g., a break-in, smoke, fire, or flooding) in a first premises by monitoring and alerting service 350 may be used thereby as a trigger to raise the alert level of a second premises that is related to the first premises. For example, the first premises and the second premises may be apartments in the same building, homes in the same neighborhood, offices in the same office park, or the like.

In another example scenario, monitoring and alerting service 350 may be configured to turn on some or all lights in an outdoor portion of premises 302 in response to an elevation in the alert level associated with premises 302. This may help deter a potential break-in. Also, during the night or when it is otherwise dark out, turning on some or all of the lights in an outdoor portion of premises 302 may assist any security cameras that are trained on the outdoor area in detecting suspicious activity. A similar approach may be taken with respect to turning on indoor lights in response to an elevation of the alert level associated with premises 302. In certain scenarios, turning on lights can enable a switch from IR-based detection to color image-based detection.

In another example scenario, monitoring and alerting service 350 may be configured to determine if a person detected on premises 302 is a person on a list of "known persons" who are permitted to be on premises 302 (e.g., a maid or cleaning lady). If the detected person is on the list, then monitoring and alerting service 350 may not raise the alert level associated with premises 302. However, if the detected person is not on the list, then monitoring and alerting service 350 may raise the alert level associated with premises 302. In an alternative implementation, when the alert level associated with premises 302 is elevated, the detected presence of a person not on the list of "known persons" may cause an alert to be generated by monitoring and alerting service 350.

In another example scenario, when the alert level associated with premises 302 is elevated, monitoring and alerting service 350 may be configured to begin tracking people within premises 302 to determine if any strangers are present and/or if such people are behaving abnormally or in a suspicious or dangerous manner. Speech recognition and/or face recognition technologies may be used to distinguish between regular occupants of premises 302 and strangers. Speech analysis techniques such as but not limited to sentiment analysis may be used to determine an intent or emotional state of an individual. In certain implementations, monitoring and alerting service 350 may utilize machine learning to determine which individuals should be in premises 302 and what their routines are. Such information can be used to train an ML model that can be used to detect unknown individuals and/or anomalous behaviors. For example, such an ML model may be used to determine that a housekeeper who has entered premises 302 using his/her security code is spending an abnomally long amount of time near a home safe.

In another example scenario in which premises 302 is an office, monitoring and alerting service 350 may be configured to elevate the alert level associated with premises 302 in response to detecting that a person who has entered premises 302 is not a registered employee, has not followed a standard vistor check-in procedure, is accessing a resource or location to which they should not have access (e.g., based on identity-based or role-based access protocols) or has otherwise behaved in a suspicious or anomalous manner. In further accordance with this example, while the office is in an elevated alert state, certain precautions may be automatically implemented such as changing a WiFi password for the office, turning off network access to certain offices, ports, or floors, engaging locks on doors to certain rooms or areas of the office, or the like.

In another example scenario, when the alert level associated with premises 302 is elevated, event monitoring service 354 may begin monitoring to detect if a circuit has gone out or if there otherwise has been a power loss detected in premises 302. This may indicate that an intruder is cutting power to premises 302.

In another example scenario, monitoring and alerting service 350 may be configured to condition elevating the alert level of premises 302 on whether or not people are supposed to be in premises 302. For example, monitoring and alerting service 350 may determine that people are not supposed to be in premises 302 based on explicit user input or by inference (e.g., by tracking a user's location to outside premises 302) and raise the alert level associated with premises 302 accordingly. Furthermore, when no one is supposed to be home and the alert level has been raised, monitoring and alerting service 350 may be configured to detect certain events that are indicative of a person being on premises 302, such as changes in state of smart switches, passive infrared (PIR) motion detection, or the like.

In another example scenario, monitoring and alerting service 350 may be selectively configured to operate in (i) a first mode in which pets but no people should be present and thus the detection of certain activities associated with pets will not trigger an elevation in alert level or (ii) a second mode in which no people or pets should be present and thus the detection of any activity associated with people or pets will trigger an elevation in alert level.

In another example scenario, monitoring and alerting service 350 may activate or change a manner of operation of certain IoT devices located within premises 302 in response to an elevation of the alert level associated therewith. For example, monitoring and alerting service 350 may cause one or more lights to turn on, may change the color of one or more lights, may cause one or more lights to start flashing, or may cause audio alerts to be routed to any cameras that also happen to have speakers.

In another example scenario, in response to the elevation of the alert level associated with premises 302, alert generation service 356 may begin sending alerts to a television, a smart phone (e.g, a mobile application executing on the smart phone), or other user device of a user associated with premises 302.

In another example scenario, monitoring and alerting service 350 may utilize machine learning to adapt a multi-alert-level monitoring and alerting scheme implemented for a first premises to a second premises. For example, if a user owns two different homes, monitoring and alerting service 350 mayutilize machine learning to adapt a multi-alert-level monitoring and alerting scheme implemented for the first home to the second home, while making certain modifications to account for differences between the two homes.

In another example scenario, monitoring and alerting service 350 may be configured to elevate the alert level associated with premises 302 based on detecting inclement or dangerous weather. For example, event monitoring service 354 may be configured to utilize one or more of IoT devices 306, 308, 310 or 312 to detect sounds and/or images indicative of inclement or dangerous weather and trigger an elevated alert level based on such detection. Likewise, event monitoring service 354 may be configured to receive or otherwise obtain an indication of inclement or dangerous weather that is published by a weather service and triger an elevated alert level based on the same.

In another example scenario, while premises 302 is at an elevated alert level, monitoring and alerting service 350 may operate to record sensor data collected from one or more of IoT devices 306, 308, 310 or 312 to a new or additional storage location (e.g., other than IoT device sensor data store 360). Writing to a new or additional storage location may entail, for example, automatically allocating or clearing local memory on a user device (e.g., user device 304) or an IoT device (e.g., any of IoT devices 306, 308, 310 or 312) to accommodate the recording of sensor data thereon. This may help preserve such sensor data by providing a redundant or backup copy thereof. In certain implementations, based on the elevation of the alert level associated with premises 302, monitoring and alerting service 350 may turn off overwriting of recorded sensor data for some period of time (e.g., until the alert level is lowered or some other time).

In another example scenario, while premises 302 is at an elevated alert level, monitoring and alerting service 350 may be configured to detect a loss of power and/or internet service to premises 302 and, in response to such detection, send a recorded message or request from the cloud to a user (e.g., a homeowner of premises 302) and/or a third party (e.g., emergency services, law enforcement agency). Monitoring and alerting service 350 may also elevate the alert level associated with premises 302 in response to detecting a loss of power to a portion or all of premises 302 or a loss of internet service to a portion or all of premises 302.

In another example scenario, monitoring and alerting service 350 may configured to elevate the alert level associated with premises 302 in response to detecting that an occupant thereof is in distress or under duress (e.g., by performing speech analysis on the occupant's speech, by detecting sub-pixel movement in video of an occupant that is indicative of an elevated pulse, by reading biometric data from a smart watch of an occupatnt, by detecting through visual and/or audio sensing a stranger on the premises that is using hostile words, a raised voice, or behaving in a threatening manner, or the like).

In another example scenario, when premises 302 is at an elevated alert level, monitoring and alerting service 350 may be configured to detect when the user has spoken a particular phrase or "safe word" and based on detecting such phrase or "safe word", may send an emergency message or request for help to a home security service, 911 emergency service, law enforcement agency, fire department or remote user (e.g., a remote family member or friend). This may be particularly useful in situations in which the user is under duress (e.g., a home invasion) but does not wish to alert an intruder or other assailant to the fact that they are seeking help from an outside entity.

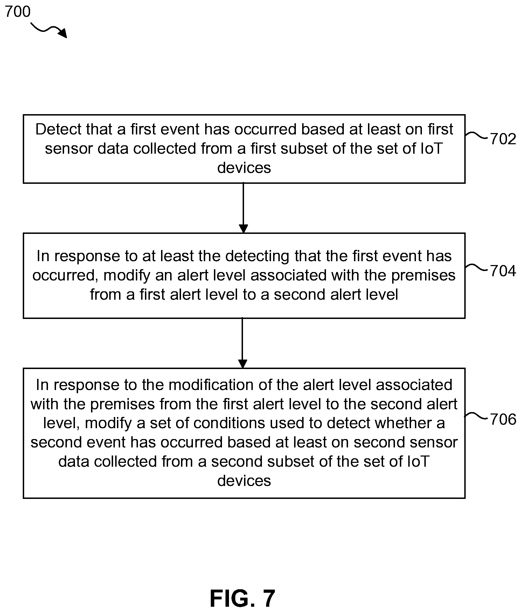

FIG. 7 illustrates a flow diagram of a method 700 for providing a multi-alert-level monitoring and alerting service for a premises comprising a set of IoT devices, according to some embodiments. Method 700 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 7, as will be understood by a person of ordinary skill in the art.

Method 700 shall be described with reference to FIG. 3. However, method 700 is not limited to that example embodiment.

In 702, event monitoring service 354 of monitoring and alerting service 350 detects that a first event has occurred based at least on first sensor data collected from a first subset of the set of IoT devices 306, 308, 310 and 312.

In 704, in response to at least the detecting that the first event has occurred, event monitoring service 354 modifies (e.g., elevates) an alert level associated with premises 302 from a first alert level to a second alert level.

In 706, in response to the modification of the alert level associated with premises 302 from the first alert level to the second alert level, event monitoring service 354 modifies a set of conditions used to detect whether a second even has occurred based at least on second sensor data collected from a second subset of the set of IoT devices 306, 308, 310 and 312. The second subset of the set of IoT devices may be the same as the first subset of the set of IoT devices or may be a different subset. Modifying the set of conditions used to detect whether the second event has occurred may comprises one or more of adding or removing a condition from the set of conditions, or modifying a threshold associated with a condition in the set of conditions.

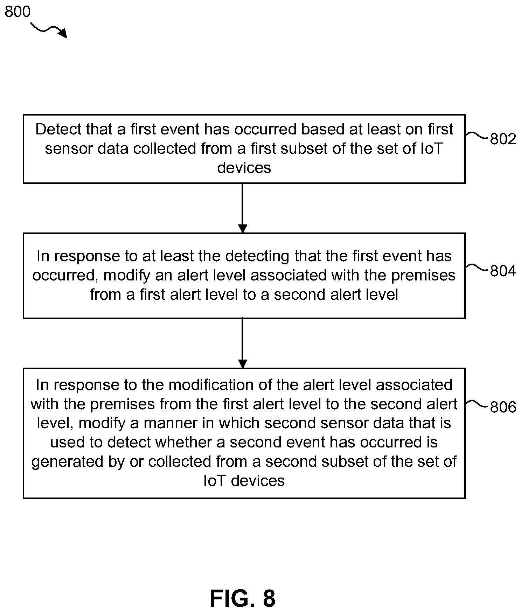

FIG. 8 illustrates a flow diagram of a method 800 for providing a multi-alert-level monitoring and alerting service for a premises comprising a set of IoT devices, according to some embodiments. Method 800 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 8, as will be understood by a person of ordinary skill in the art.

Method 800 shall be described with reference to FIG. 3. However, method 800 is not limited to that example embodiment.

In 802, event monitoring service 354 of monitoring and alerting service 350 detects that a first event has occurred based at least on first sensor data collected from a first subset of the set of IoT devices 306, 308, 310 and 312.

In 804, in response to at least the detecting that the first event has occurred, event monitoring service 354 modifies (e.g., elevates) an alert level associated with premises 302 from a first alert level to a second alert level.

In 806, in response to the modification of the alert level associated with premises 302 from the first alert level to the second alert level, event monitoring service 354 modifies a manner in which second sensor data that is used to detect whether a second event has occurred is generated by or collected from a second subset of the set of IoT devices 306, 308, 310 and 312. The second subset of the set of IoT devices may be the same as the first subset of the set of IoT devices or may be a different subset.

Modifying the manner in which the second sensor data is generated by the second subset of the set of IoT devices 306, 308, 310 and 312 may comprise one or more of: modifying a manner of operation of at least one sensor that is used to generate the second sensor data, modifying a physical environment in which at least one sensor that is used to generate the second sensor data operates, or modifying a set of sensors that are used to generate the second sensor data.

Modifying the manner in which the second sensor data is collected from the second subset of the set of IoT devices 306, 308, 310 and 312 may comprise adding or modifying a communication channel over which the second sensor data is collected.

Modifying the manner in which the second sensor data is collected from the second subset of the set of IoT devices 306, 308, 310 and 312 may comprise one or more of: recording the second sensor data to a new storage location; or changing a duration for which the second sensor data is stored.

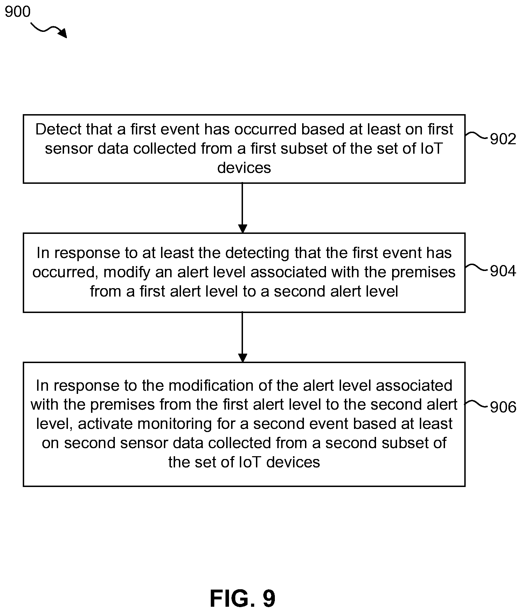

FIG. 9 illustrates a flow diagram of a method 900 for providing a multi-alert-level monitoring and alerting service for a premises comprising a set of IoT devices, according to some embodiments. Method 900 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 9, as will be understood by a person of ordinary skill in the art.

Method 900 shall be described with reference to FIG. 3. However, method 900 is not limited to that example embodiment.

In 902, event monitoring service 354 of monitoring and alerting service 350 detects that a first event has occurred based at least on first sensor data collected from a first subset of the set of IoT devices 306, 308, 310 and 312.

In 904, in response to at least the detecting that the first event has occurred, event monitoring service 354 modifies (e.g., elevates) an alert level associated with premises 302 from a first alert level to a second alert level.

In 906, in response to the modification of the alert level associated with premises 302 from the first alert level to the second alert level, event monitoring service 354 activates monitoring for a second event based at least on second sensor data collected from a second subset of the set of IoT devices 306, 308, 310 and 312. The second subset of the set of IoT devices may be the same as the first subset of the set of IoT devices or may be a different subset.

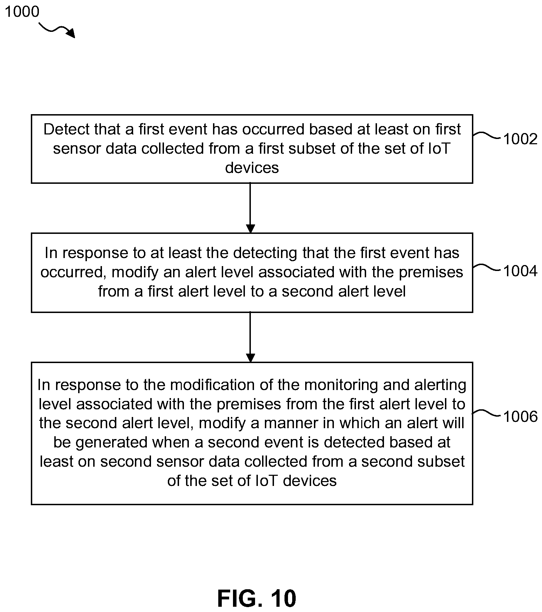

FIG. 10 illustrates a flow diagram of a method 1000 for providing a multi-alert-level monitoring and alerting service for a premises comprising a set of IoT devices, according to some embodiments. Method 1000 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 10, as will be understood by a person of ordinary skill in the art.

Method 1000 shall be described with reference to FIG. 3. However, method 1000 is not limited to that example embodiment.

In 1002, event monitoring service 354 of monitoring and alerting service 350 detects that a first event has occurred based at least on first sensor data collected from a first subset of the set of IoT devices 306, 308, 310 and 312.

In 1004, in response to at least the detecting that the first event has occurred, event monitoring service 354 modifies (e.g., elevates) an alert level associated with premises 302 from a first alert level to a second alert level.

In 1006, in response to the modification of the alert level associated with premises 302 from the first alert level to the second alert level, alert generation service 356 modifies a manner in which an alert will be generated when a second event is detected based at least on second sensor data collected from a second subset of the set of IoT devices 306, 308, 310 and 312. The second subset of the set of IoT devices may be the same as the first subset of the set of IoT devices or may be a different subset.

### Example Computer System

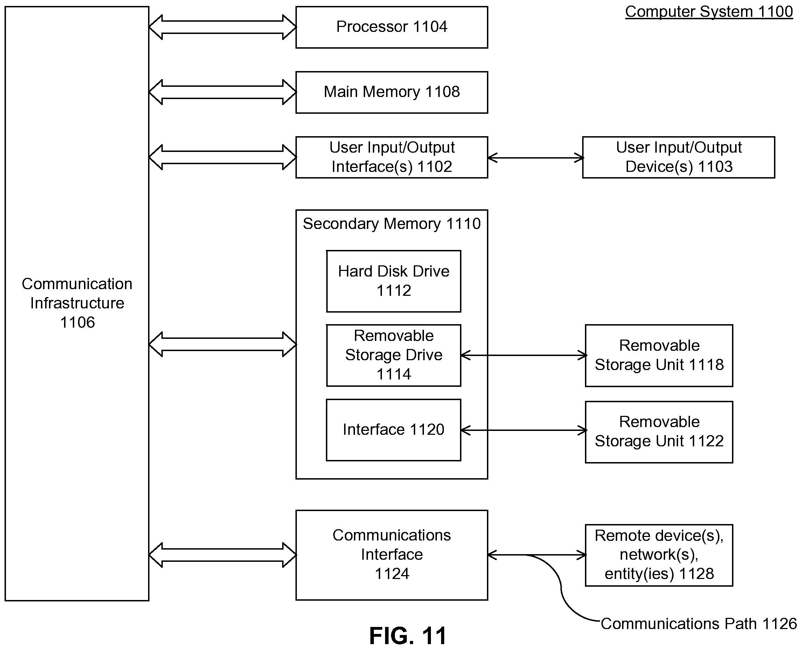

Various embodiments may be implemented, for example, using one or more well-known computer systems, such as computer system 1100 shown in FIG. 11. For example, one or more of user device 304, IoT device 306, IoT device 308, IoT device 310, IoT device 312, monitoring and alerting service 350, monitoring and alerts manager 352, event monitoring service 354, alert generation service 356, or IoT device sensor data store 360 may be implemented using combinations or sub-combinations of computer system 1100. Also or alternatively, one or more computer systems 1100 may be used, for example, to implement any of the embodiments discussed herein, as well as combinations and sub-combinations thereof.

Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more of processors 1104 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114. Removable storage drive 1114 may be a floppy disk drive, a magnetic tape drive, a compact disk drive, an optical storage device, tape backup device, and/or any other storage device/drive.

Removable storage drive 1114 may interact with a removable storage unit 1118. Removable storage unit 1118 may include a computer usable or readable storage device having stored thereon computer software (control logic) and/or data. Removable storage unit 1118 may be a floppy disk, magnetic tape, compact disk, DVD, optical storage disk, and/ any other computer data storage device. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100 or processor(s) 1104), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 11. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method for providing a multi-alert-level monitoring and alerting service for a premises comprising a set of Internet of Things (IoT) devices, comprising:
detecting, by at least one computer processor, that a first event has occurred based at least on first sensor data collected from a first subset of the set of IoT devices;
in response to at least the detecting that the first event has occurred, modifying an alert level associated with the premises from a first alert level to a second alert level; and
in response to the modification of the alert level associated with the premises from the first alert level to the second alert level, performing one or more of:
modifying a set of conditions used to detect whether a second event has occurred based at least on second sensor data collected from a second subset of the set of IoT devices; or
modifying a manner in which the second sensor data is generated by or collected from the second subset of the set of IoT devices.

2. The computer-implemented method of claim 1, wherein modifying the set of conditions used to detect whether the second event has occurred comprises one or more of:
adding or removing a condition from the set of conditions; or
modifying a threshold associated with a condition in the set of conditions.

3. The computer-implemented method of claim 1, wherein modifying the manner in which the second sensor data is generated by the second subset of the set of IoT devices comprises one or more of:
modifying a manner of operation of at least one sensor that is used to generate the second sensor data;
modifying a physical environment in which at least one sensor that is used to generate the second sensor data operates; or
modifying a set of sensors that are used to generate the second sensor data.

4. The computer-implemented method of claim 1, wherein modifying the manner in which the second sensor data is collected from the second subset of the set of IoT devices comprises:
adding or modifying a communication channel over which the second sensor data is collected; and/or
one or more of:
recording the second sensor data to a new storage location; or
changing a duration for which the second sensor data is stored.

5. The computer-implemented method of claim 1, further comprising:
in further response to the modification of the alert level associated with the premises from the first alert level to the second alert level, activating monitoring for a third event based at least on third sensor data collected from a third subset of the set of IoT devices; and/or
in further response to the modification of the alert level associated with the premises from the first alert level to the second alert level, modifying a manner in which an alert will be generated when a third event is detected based at least on third sensor data collected from a third subset of the set of IoT devices.

6. A system for providing a multi-alert-level monitoring and alerting service for a premises comprising a set of Internet of Things (IoT) devices, comprising:
one or more memories; and
at least one processor each coupled to at least one of the memories and configured to perform operations comprising:
detecting that a first event has occurred based at least on first sensor data collected from a first subset of the set of IoT devices;
in response to at least the detecting that the first event has occurred, modifying an alert level associated with the premises from a first alert level to a second alert level; and
in response to the modification of the alert level associated with the premises from the first alert level to the second alert level, performing one or more of:
modifying a set of conditions used to detect whether a second event has occurred based at least on second sensor data collected from a second subset of the set of IoT devices; or
modifying a manner in which the second sensor data is generated by or collected from the second subset of the set of IoT devices.

7. The system of claim 6, wherein modifying the set of conditions used to detect whether the second event has occurred comprises one or more of:
adding or removing a condition from the set of conditions; or
modifying a threshold associated with a condition in the set of conditions.

8. The system of claim 6, wherein modifying the manner in which the second sensor data is generated by the second subset of the set of IoT devices comprises one or more of:
modifying a manner of operation of at least one sensor that is used to generate the second sensor data;
modifying a physical environment in which at least one sensor that is used to generate the second sensor data operates; or
modifying a set of sensors that are used to generate the second sensor data.

9. The system of claim 6, wherein modifying the manner in which the second sensor data is collected from the second subset of the set of IoT devices comprises:
adding or modifying a communication channel over which the second sensor data is collected; and/or
one or more of:
recording the second sensor data to a new storage location; or
changing a duration for which the second sensor data is stored.

10. The system of claim 6, wherein the operations further comprise:
in further response to the modification of the alert level associated with the premises from the first alert level to the second alert level, activating monitoring for a third event based at least on third sensor data collected from a third subset of the set of IoT devices; and/or
in further response to the modification of the alert level associated with the premises from the first alert level to the second alert level, modifying a manner in which an alert will be generated when a third event is detected based at least on third sensor data collected from a third subset of the set of IoT devices.

11. A non-transitory computer-readable medium having instructions stored thereon that, when executed by at least one computing device, cause the at least one computing device to perform operations for providing a multi-alert-level monitoring and alerting service for a premises comprising a set of Internet of Things (IoT) devices, the operations comprising:
detecting that a first event has occurred based at least on first sensor data collected from a first subset of the set of IoT devices;
in response to at least the detecting that the first event has occurred, modifying an alert level associated with the premises from a first alert level to a second alert level; and
in response to the modification of the alert level associated with the premises from the first alert level to the second alert level, performing one or more of:
modifying a set of conditions used to detect whether a second event has occurred based at least on second sensor data collected from a second subset of the set of IoT devices; or
modifying a manner in which the second sensor data is generated by or collected from the second subset of the set of IoT devices.

12. The non-transitory computer-readable medium of claim 11, wherein modifying the set of conditions used to detect whether the second event has occurred comprises one or more of:
adding or removing a condition from the set of conditions; or
modifying a threshold associated with a condition in the set of conditions.

13. The non-transitory computer-readable medium of claim 11, wherein modifying the manner in which the second sensor data is generated by the second subset of the set of IoT devices comprises one or more of:
modifying a manner of operation of at least one sensor that is used to generate the second sensor data;
modifying a physical environment in which at least one sensor that is used to generate the second sensor data operates; or
modifying a set of sensors that are used to generate the second sensor data.

14. The non-transitory computer-readable medium of claim 11, wherein modifying the manner in which the second sensor data is collected from the second subset of the set of IoT devices comprises:
adding or modifying a communication channel over which the second sensor data is collected; and/or
one or more of:
recording the second sensor data to a new storage location; or
changing a duration for which the second sensor data is stored.

15. The non-transitory computer-readable medium of claim 11, wherein the operations further comprise:
in further response to the modification of the alert level associated with the premises from the first alert level to the second alert level, activating monitoring for a third event based at least on third sensor data collected from a third subset of the set of IoT devices.
